(19) Europäisches Patentamt

European Patent Office

Office européen des brevets

(11) **EP 0 858 837 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.[7]: **B01D 53/94**, B01D 53/86,
F01N 3/08, B01D 53/96

(21) Anmeldenummer: **98102230.4**

(22) Anmeldetag: **09.02.1998**

(54) **Verfahren zur Regeneration eines Speicherkatalysators**

Process for regenerating a storage catalyst

Procédé pour la régénération d'un catalyseur d'accumulateur

(84) Benannte Vertragsstaaten:
**DE FR GB**

(30) Priorität: **12.02.1997 DE 19705335**

(43) Veröffentlichungstag der Anmeldung:
**19.08.1998 Patentblatt 1998/34**

(73) Patentinhaber: **SIEMENS AKTIENGESELLSCHAFT
80333 München (DE)**

(72) Erfinder: **Schürz, Willibald, Dr.
93089 Aufhausen (DE)**

(56) Entgegenhaltungen:
**EP-A- 0 580 389           EP-A- 0 636 770
EP-A- 0 690 213           WO-A-98/10177
DE-A- 19 522 165         DE-A- 19 626 836**

**Beschreibung**

Die Erfindung betrifft ein Verfahren zur Regeneration eines Speicherkatalysators gemäß dem Oberbegriff des Anspruchs 1.

Speicherkatalysatoren werden beispielsweise bei Motoren mit magerer Verbrennung eingesetzt, um die geforderten Abgasgrenzwerte einhalten zu können. Dabei werden vorzugsweise Speicherkatalysatoren verwendet, die die bei der Verbrennung erzeugten NOx-Verbindungen absorbieren. Da jedoch die Speicherkapazität des Speicherkatalysators begrenzt ist, ist es notwendig, eine bedarfsgerechte Regeneration des Speicherkatalysators durchzuführen.

In DE 196 07 151 C ist ein Verfahren zur Regeneration eines Speicherkatalysators beschrieben, bei dem eine bedarfsgerechte Regeneration des Speicherkatalysators durchgeführt wird, wenn eine vorgegebene Menge an NOx-Verbindungen, die am Ausgang des Speicherkatalysator ausgegeben wird, überschritten wird.

Aus DE 195 22 165 A1 ist eine Vorrichtung und ein Verfahren für die Regelung einer Verbrennungskraftmaschine bekannt, bei der eine Abgasreinigungskatalysatoreinrichtung vorgesehen ist, die im Abgas enthaltene Stickstoffoxide absorbiert, wenn der Motor in einem Magerverbrennungszustand ist. Befindet sich der Motor in einem Fettverbrennungszustand, so werden die absorbierten Stickstoffoxide desoxidiert. Die Motorregelungsvorrichtung weist eine elektronische Steuereinheit zum Schätzen der Menge anderer Reinigungsfähigkeitsverringerungssubstanzen als Stickstoffoxide auf, welche die Stickstoffoxidabsorbtionsfähigkeit der Katalysatoreinrichtung herabsetzt und von der Katalysatoreinrichtung absorbiert wird. Beispielsweise werden Sulfatverbindungen als Reinigungsfähigkeitsverringungssubstanzen von der Katalysatoreinrichtung absorbiert. Für die Schätzung wird der akkumulierte Wert der Fahrzeugstrecke der Kraftstoffverbrauch des Motors oder die Ansaugluftmenge verwendet. Überschreitet die geschätzte Adsorbtionsmenge an Reinigungsfähigkeitsverringungssubstanzen eine vorbestimmte Adsorbtionsmenge, so wird eine Regenerationsphase gestartet.

Die Aufgabe der Erfindung beruht darin, das Speicherverhalten des Speicherkatalysators zu verbessern.

Die Aufgabe der Erfindung wird durch die Merkmale des Anspruchs 1 gelöst.

Ein Vorteil der Erfindung beruht darin, daß bei der Berechnung der Regenerationsphase die thermische Alterung des Speicherkatalysators berücksichtigt wird. Vorteilhafte Ausbildungen und Verbesserungen der Erfindung sind in den Unteransprüchen angegeben.

Die Erfindung wird anhand der Figuren näher erläutert. Es zeigen:

Figur 1: Eine schematische Anordnung einer Brennkraftmaschine mit einem Speicherkatalysator,

Figur 2: Ein erstes Verfahren zur Regeneration des Speicherkatalysators und

Figur 3: Ein zweites Verfahren zur Regeneration des Speicherkatalysators.

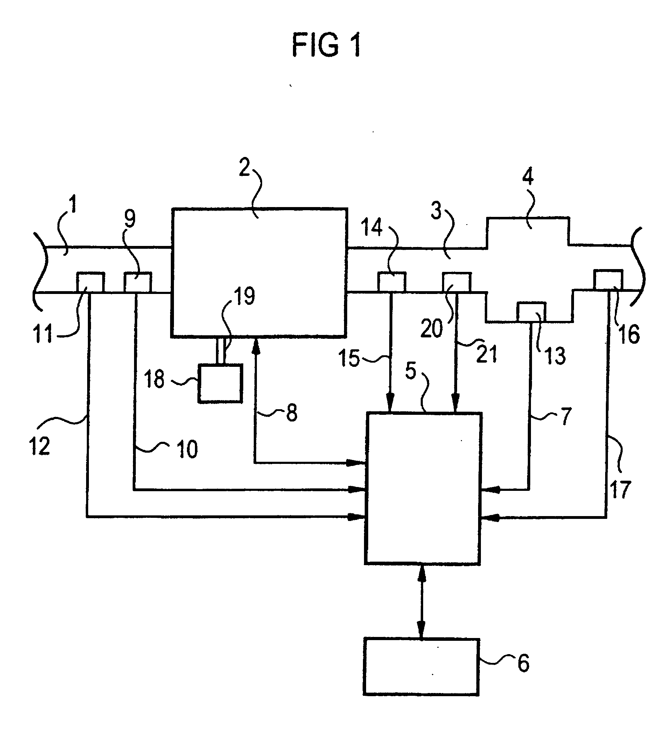

Figur 1 zeigt eine Brennkraftmaschine 2, die mit einem Ansaugtrakt 1 und einem Abgastrakt 3 verbunden ist. Im Ansaugtrakt 1 ist ein Temperaturfühler 9 und eine Lastmeßeinrichtung 11, beispielsweise ein Luftmassenmesser oder ein Druckmesser angeordnet. Die Brennkraftmaschine 2 umfaßt eine Einspritzanlage, die über eine Kraftstoffleitung 19 mit einem Kraftstofftank 18 in Verbindung steht. Der Abgastrakt 3 führt zu einem Speicherkatalysator 4, der insbesondere NOx-Verbindungen absorbiert und über einen Temperatursensor 13 verfügt. Nach dem Speicherkatalysator 4 ist im Abgastrakt 3 ein Abgassensor 16 angeordnet, der vorzugsweise die Konzentration von Kohlenwasserstoffen oder die Konzentration von reduzierenden Abgaskomponenten wie z.B. Kohlenmonoxid und Wasserdampf mißt. Zwischen der Brennkraftmaschine 2 und dem Speicherkatalysator 4 ist eine Lambdasonde 14 im Abgastrakt 3 vorgesehen, mit der das Kraftstoff-zu-Luftverhältnis vor dem Speicherkatalysator 4 bestimmt wird.

Es ist zudem ein Steuergerät 5 vorgesehen, das über eine Datenleitung mit einem Datenspeicher 6, über eine Lastmeßleitung 12 mit der Lastmeßeinrichtung 11, über eine Temperaturmeßleitung 10 mit dem Temperaturfühler 9, über eine dritte Meßleitung 21 mit einem Schwefelsensor 20, der im Abgastrakt 3 eingebracht ist, über Daten- und Steuerleitungen 8 mit der Brennkraftmaschine 2, über eine zweite Meßleitung 15 mit der Lambdasonde 14, über eine erste Meßleitung 7 mit dem Temperatursensor 13 und über eine vierte Meßleitung 17 mit dem Abgassensor 16 verbunden ist.

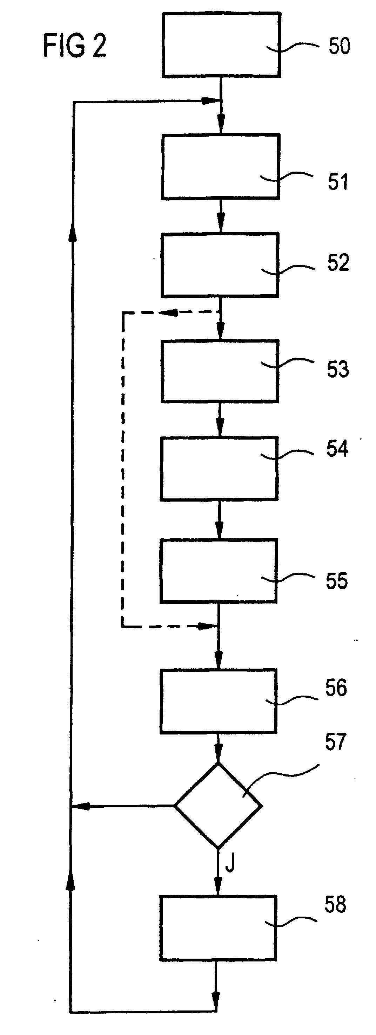

Figur 2 zeigt ein Verfahren für die Sulfatregeneration des Speicherkatalysators 4. Bei Programmpunkt 50 erfolgt der Start der Brennkraftmaschine und bei Programmpunkt 51 ermittelt das Steuergerät 5 den Schwefelgehalt des Kraftstoffes, der der Brennkraftmaschine 2 zugeführt wird. Dazu wird entweder der Schwefelgehalt im Abgas direkt über den Schwefelsensor 20 bestimmt oder in einer vorgegebenen Tabelle im Datenspeicher 6 ein vorgegebener Schwefelgehalt ausgelesen.

Anschließend ermittelt das Steuergerät 5 den von der Brennkraftmaschine 2 verbrauchten Kraftstoff bei Programmpunkt 52. Die folgenden Programmpunkte 53 bis 55 werden vom Steuergerät 5 einzeln oder in Kombination nur vorzugsweise durchgeführt, so daß bei einfachen Verfahren nach Abarbeitung des Programmpunktes 52 sofort nach Programmpunkt 56 verzweigt wird.

Vorzugsweise bewertet das Steuergerät 5 den verbrauchten Kraftstoff bei Programmpunkt 53 in Abhängigkeit von der Last und/ oder der Drehzahl der Brennkraftmaschine 2, bei der der Kraftstoff verbraucht wurde. Weiterhin wird der Kraftstoffverbrauch vorzugsweise vom Steuergerät 5 bei Programmpunkt 54 in Abhängigkeit von dem Kraftstoff-zu-Luftverhältnis bewertet, unter dem der Kraftstoff verbrannt wurde. Anschließend berücksichtigt das Steuergerät 5 bei Programmpunkt 55 vorzugsweise die Temperatur des Speicherkatalysators 4, die bei der Verbrennung des Kraftstoffes vorherrscht, als Wichtungsfaktor.

Anschließend wird bei Programmpunkt 56 die im Speicherkatalysator 4 vorliegende Abspeicherung von Sulfat in Abhängigkeit vom Kraftstoffverbrauch vom Steuergerät 5 berechnet. Das Steuergerät 5 berücksichtigt bei der Berechnung der Sulfatabspeicherung die Last und/oder die Drehzahl, und/oder das Kraftstoff-zu-Luftverhältnis und/oder die Katalysatortemperatur, bei der der Kraftstoff verbrannt wurde. Auf diese Weise wird eine genaue Berechnung des abgespeicherten Sulfates ermöglicht.

Anschließend vergleicht das Steuergerät 5 bei Programmpunkt 57 die bei Programmpunkt 56 berechnete Sulfatabspeicherung mit einer vorgegebenen maximalen Sulfatabspeicherung. Ergibt der Vergleich bei Programmpunkt 57, daß die Sulfatabspeicherung größer als die vorgegebene, maximale Sulfatabspeicherung ist, so wird nach Programmpunkt 58 verzweigt und eine Sulfatregeneration des Speicherkatalysators 4 durchgeführt. Dazu wird der Speicherkatalysator 4 auf eine Temperatur von über 600 °C erhitzt und der Brennkraftmaschine 2 ein Kraftstoff-zu-Luft-Gemisch zugeführt, das einer Luftzahl $\lambda < 1$ entspricht. Vorzugsweise wird ein Kraftstoff-zu-Luft-Gemisch verwendet, das einer Luftzahl $\lambda$ von 0,99 bis 0,96, vorzugsweise einer Luftzahl von 0,97 entspricht.

Die Aufheizung des Speicherkatalysators 4 wird dadurch erreicht, daß das Steuergerät 5 eine höhere Last, d. h. ein höheres Drehmoment bei der Brennkraftmaschine 2 einstellt und den Zündwinkel der Brennkraftmaschine 2 nach spät verstellt.

Die Sulfatregenerationsphase wird vom Steuergerät 5 für eine vorgegebene Zeitdauer durchgeführt, die experimentell festgelegt ist und vorzugsweise von der Menge der Sulfatspeicherung im Speicherkatalysator 4 oder von der Menge des verbrauchten Kraftstoffes abhängt.

In einer einfachen Ausführung hängt die Zeitdauer der Regenerationsphase von der Zeitdauer ab, in der die Brennkraftmaschine 2 mit einem Kraftstoff-zu-Luftverhältnis betrieben wurde, das einer Luftzahl von $\lambda > 1$ entspricht.

Bei einer bevorzugten Ausführung der Erfindung schaltet das Steuergerät 5 die Regenerationsphase in Abhängigkeit von dem HC-Meßsignal ab, das vom Abgassensor 16 zugeführt wird. Übersteigt die vom Abgassensor 16 gemessene HC-Konzentration im Abgas nach dem Speicherkatalysator 4 einen vorgegebenen Wert, so schaltet das Steuergerät 5 die Regenerationsphase für den Abbau des im Speicherkatalysator 4 abgespeicherten Sulfats ab.

Anschließend wird nach Programmpunkt 51 zurückverzweigt.

Ergibt die Abfrage bei Programmpunkt 57, daß die bei Programmpunkt 56 berechnete Sulfatabspeicherung unter der maximalen Sulfatabspeicherung liegt, so wird anschließend nach Programmpunkt 51 zurückverzweigt und das Verfahren erneut durchlaufen.

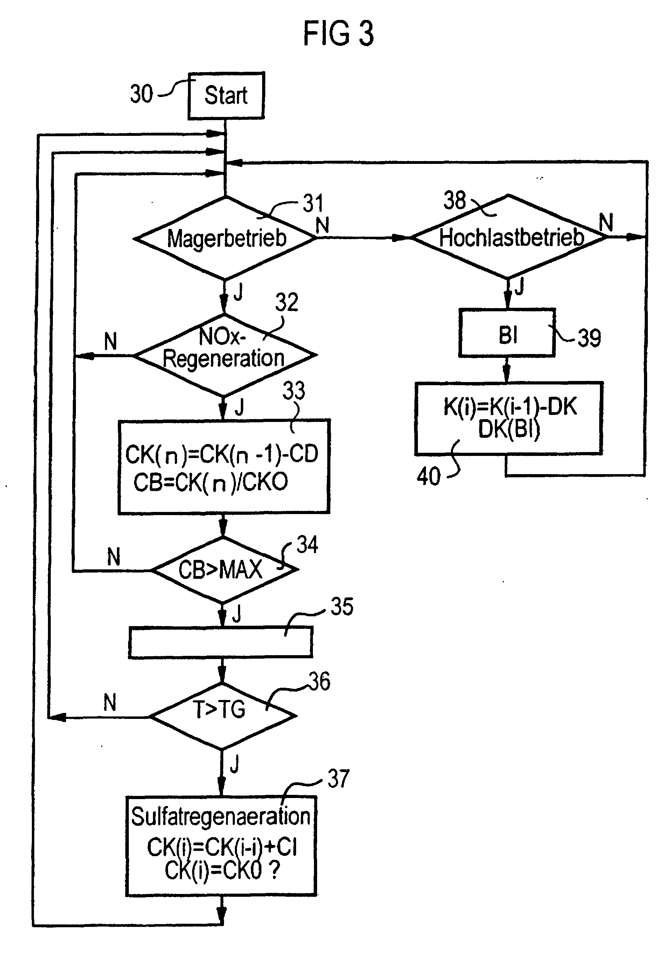

Figur 3 zeigt eine weitere vorteilhafte Ausbildung des erfindungsgemäßen Verfahrens, bei dem bei Programmpunkt 30 ein Start der Brennkraftmaschine 2 erfolgt. Anschließend überprüft bei Programmpunkt 31 das Steuergerät 5, ob die Brennkraftmaschine 2 in einem Magerbetrieb, d. h. mit einer Luftzahl von $\lambda > 1$ betrieben wird. Ist dies der Fall, so wird anschließend nach Programmpunkt 32 verzweigt.

Bei Programmpunkt 32 überprüft das Steuergerät 5, ob eine Regenerationsphase für den Abbau von im Speicherkatalysator 4 abgelegten NOx-Verbindungen durchgeführt werden soll. Dabei überprüft das Steuergerät 5, ob z.B. die NOx-Konzentration nach dem Speicherkatalysator 4 oder die Beladung des Katalysators einen entsprechenden Grenzwert überschreitet. Diese Verfahren sind ausführlich im DE 196 07 151 C beschrieben und werden hier nicht näher ausgeführt.

Stellt das Steuergerät 5 fest, daß eine NOx-Regenerationsphase durchgeführt werden soll, dann wird der Brennkraftmaschine 2 ein fettes Kraftstoffgemisch für eine vorgegebene Zeitdauer zugeführt. Die NOx-Regenerationsphase wird abgeschlossen, wenn die NOx-Beladung des Speicherkatalysators einen vorgegebenen Grenzwert unterschreitet. Nach der NOx-Regenerationsphase wird nach Programmpunkt 33 verzweigt.

Bei Programmpunkt 33 berechnet das Steuergerät 5 die Speicherkapazität des Speicherkatalysators 4, die proportional zur Anzahl der durchgeführten NOx-Regenerationsphasen abnimmt, nach folgender Formel:

$$CK(n) = CK(n\text{-}1) - CD,$$

wobei mit CK die Speicherkapazität für die Aufnahme von Stickoxid-Verbindungen im Speicherkatalysator 4, mit n die Anzahl der durchgeführten NOx-Regenerationszyklen, mit CD eine vorgegebene Speicherkapazität bezeichnet ist, mit der die Speicherkapazität des Speicherkatalysators 4 gemittelt über die Betriebsdauer zwischen zwei aufeinander folgenden NOx-Regenerationsphase aufgrund von Sulfatspeicherung im Speicherkatalysator 4 abnimmt.

Anschließend wird eine relative Speicherbeladung zu Beginn einer NOx-Beladungsphase aufgrund von Sulfateinlagerung im Speicherkatalysator 4 nach folgender Formel berechnet:

$$CB = CK(n)/CK0,$$

wobei mit CB die relative Speicherbeladung zu Beginn einer NOx-Beladungsphase, mit CK(n) die Speicherkapazität nach der Durchführung von n NOx-Regenerationsphasen und mit CK0 eine Basisspeicherkapazität bezeichnet ist, die der Speicherkatalysator 4 aufweist, wenn kein Sulfat im Speicherkatalysator 4 abgespeichert ist.

Die vorgegebene Speicherkapazität CD ist vorzugsweise vom Schwefelgehalt des verwendeten Kraftstoffes abhängig. Eine entsprechende Tabelle ist im Datenspeicher 6 abgelegt.

Die Verbesserung des erfindungsgemäßen Verfahrens wird dadurch erreicht, daß bei der Basisspeicherkapazität CK0 die thermische Belastung, der der Speicherkatalysator 4 beim Betrieb ausgesetzt war, berücksichtigt. Dazu wird bei der Berechnung der relativen Speicherbeladung CB die Basisspeicherkapazität CK0 mit einem Korrekturfaktor K bewertet (CKO*K), wobei der. Korrekturfaktor K von der Zeit abhängt, in der die Brennkraftmaschine 2 mit vorgegebenen Last- und Drehzahlen betrieben wurde. Vorzugsweise hängt der Korrekturfaktor K von der thermischen Vergangenheit des Speicherkatalysators 4 ab, d. h. von der Zeit und der Temperatur, mit der der Speicherkatalysator 4 bisher betrieben wurde. Dabei wird die gesamte Betriebszeit des Speicherkatalysators berücksichtigt. Der Wert des Korrekturfaktors K nimmt mit zunehmender thermischer Alterung ab, da auch die Speicherkapazität mit zunehmender Alterung abnimmt. Die Temperatur des Speicherkatalysators 4 wird dazu entweder direkt gemessen, oder in Abhängigkeit von Betriebsbedingungen der Brennkraftmaschine 2 nach einem Temperaturmodell berechnet, wie dies beispielsweise in DE 44 33 631 beschrieben ist. Eine entsprechende Tabelle für den Korrekturfaktor K wird experimentell oder rechnerisch ermittelt und ist im Datenspeicher 6 abgelegt.

Anschließend vergleicht das Steuergerät 5 bei Programmpunkt 34 die relative Speicherbeladung CB mit einem vorgegebenen Maximalwert MAX. Ergibt der Vergleich, daß die relative Speicherbeladung größer als der Maximalwert ist, so wird anschließend bei Programmpunkt 35 eine Sulfatregenerationsphase angefordert. Diese kann entweder sofort vom Steuergerät 5 eingeleitet werden, oder wie in Figur 3 dargestellt ist, erst dann durchgeführt werden, wenn die Abgastemperatur T einen vorgegebenen Schwellwert TG übersteigt.

Bei Programmpunkt 36 überprüft das Steuergerät 5, ob die Temperatur T des Speicherkatalysators 4 einen vorgegebenen Schwellwert TG überschreitet. Ist dies der Fall, so wird anschließend nach Programmpunkt 37 verzweigt und eine Sulfatregenerationsphase durchgeführt. Bei der Sulfatregenerationsphase befindet sich der Speicherkatalysator 4 auf einem Temperaturniveau, das über 600°C liegt. Im Gegensatz dazu wird eine NOx-Regenerationsphase bei Temperaturen unter 600°C durchgeführt. Zudem wird vom Steuergerät 5 der Brennkraftmaschine 2 ein fettes Kraftstoffgemisch zugeführt, so daß reduzierende Abgasbedingungen im Speicherkatalysator 4 zum Abbau von Sulfatverbindungen vorliegen.

Vorzugsweise wird das fette Kraftstoffgemisch mit λ < 1 erst der Brennkraftmaschine 2 zugeführt, wenn nach dem Überschreiten einer vorgegebenen Lastschwelle eine vorgegebene Wartezeit vergangen ist, so daß die Temperatur des Speicherkatalysators 4 sicher über 600°C liegt. Eine zusätzliche Temperaturerhöhung im Speicherkatalysator 4 kann dadurch erreicht werden, daß die Zündung in Richtung spät verstellt wird.

Während der Sulfatregenerationsphase wird in vorgegebenen Zeitabständen die Speicherkapazität des Speicherkatalysators 4 nach folgender Formel berechnet:

CK(i) = CK(i-1) + CI, wobei mit CK(i) die Speicherkapazität zum Zeitpunkt i, mit CK (i-1) die Speicherkapazität zum Zeitpunkt i-1 und mit CI eine vorgegebene Speicherkapazität bezeichnet ist, die vorzugsweise last- und drehzahlabhängig ist.

Ergibt die Berechnung der Speicherkapazität CK(i), daß die Speicherkapazität CK(i) gleich der Basisspeicherkapazität CK0 ist, so wird die Sulfatregenerationsphase abgebrochen und anschließend zu Programmpunkt 31 zurückverzweigt.

Ergibt die Abfrage bei Programmpunkt 31, daß kein Magerbetrieb vorliegt, so wird anschließend nach Programmpunkt 38 verzweigt. Bei Programmpunkt 38 überprüft das Steuergerät 5, ob ein Hochlastbetrieb vorliegt, der beispielsweise durch das Last- und Drehzahlsignal oder die Höhe der Abgastemperatur T bestimmt wird.

Ergibt die Abfrage bei Programmpunkt 38, daß kein Hochlastbetrieb vorliegt, so wird anschließend zu Programmpunkt 31 zurückverzweigt.

Ergibt die Abfrage bei Programmpunkt 38, daß ein Hochlastbetrieb vorliegt, so wird anschließend bei Programmpunkt 39 ein Belastungsindex BI berechnet, der proportional zum Produkt aus der Last L und der Drehzahl D ist, wobei die Proportionalität F vorzugsweise von der Abgastemperatur T abhängt: BI= L*D*F(T). Im einfachsten Fall ist der Belastungsindex BI direkt proportional zur Last L, Drehzahl D und Temperatur T: BI=L*D*T. Diese Abhängigkeit wird jedoch vom Fachmann entsprechend den Gegebenheiten experimentell für jedes System ermittelt.

Anschließend wird bei Programmpunkt 40 der Korrekturfaktor K in Abhängigkeit von dem Belastungsindex BI vorgegebenen Zeitpunkten mit gleichem Zeitabstand verkleinert:

K(i)=K(i-1)-DK, wobei mit i ein Zeitpunkt und mit DK ein Dekrement für den Korrekturfaktor K bezeichnet ist, das vorzugsweise vom Belastungsindex BI abhängt (DK (BI)). Das Dekrement DK wird experimentell ermittelt und ist in Form einer Tabelle im Datenspeicher 6 abgelegt. Anschließend wird nach Programmpunkt 31 zurückverzweigt. Damit ist die relative Speicherbeladung CB =CK(n)/CKO(K(i)) eine Funktion vom Korrekturfaktor K(i), der die thermische Alterung des Speicherkatalysators berücksichtigt. Im einfachsten Fall wird die Basisspeicherkapazität CKO mit dem Korrekturfaktor K(i) multipliziert. Somit ist die Entscheidung, ob eine Sulfatregeneration durchgeführt werden soll, siehe Programmpunkt 34 mit der Abfrage : CB>MAX, von der thermischen Alterung des Speicherkatalysators 4 abhängig.

Ein wesentlicher Vorteil des beschriebenen Verfahrens beruht darin, daß die Auslösung der Sulfatregenerationsphase von der thermischen Alterung des Speicherkatalysators 4 abhängig ist. Somit wird eine die thermische Alterung berücksichtigende, bedarfsgerechte Regeneration des Speicherkatalysators erreicht.

Vorzugsweise werden die Verfahren nach Figur 2 und 3 in Kombination verwendet, so daß sowohl die Sulfatablagerung als auch die thermische Alterung des Speicherkatalysators bei der Ermittlung einer Regenerationsphase berücksichtigt werden.

## Patentansprüche

1. Verfahren zur Regeneration eines Speicherkatalysators für eine Brennkraftmaschine, bei dem

   - zu einem vorgebbaren Zeitpunkt eine Regenerationsphase zum Abbau des im Speicherkatalysator abgespeicherten Sulfates durchgeführt wird, **dadurch gekennzeichnet,**
   - **daß** bei der Ermittlung des Zeitpunktes die thermische Alterung des Speicherkatalysators (4) berücksichtigt wird, wobei die thermische Alterung des Speicherkatalysators (4) in Abhängigkeit von der Last und der Drehzahl der Brennkraftmaschine und/oder in Abhängigkeit von der Katalysatortemperatur bestimmt wird.

2. Verfahren nach Anspruch 1, **dadurch gekennzeichnet, daß** der Zeitpunkt in Abhängigkeit von der im Speicherkatalysator abgespeicherten Menge an Sulfat ermittelt wird.

3. Verfahren nach Anspruch 2, **dadurch gekennzeichnet, daß** die Menge des im Speicherkatalysator abgespeicherten Sulfates in Abhängigkeit von der in der Brennkraftmaschine verbrannten Kraftstoffmenge berechnet wird.

4. Verfahren nach Anspruch 3, **dadurch gekennzeichnet, daß** die Kraftstoffmenge in Abhängigkeit von der Last und der Drehzahl und/oder in Abhängigkeit von dem Kraftstoff/Luft-Verhältnis und/oder in Abhängigkeit von der Katalysatortemperatur gewichtet wird, bei der Kraftstoff verbrannt wird.

5. Verfahren nach Anspruch 1, **dadurch gekennzeichnet, daß** der Zeitpunkt in Abhängigkeit von der Anzahl der durchgeführten Regenerationsphasen für den Abbau von gespeicherten Stickoxid-Verbindungen (NOx) festgelegt wird.

6. Verfahren nach einem der Ansprüche 1 bis 5, **dadurch gekennzeichnet, daß** bei der Regenerationsphase zum Abbau von Sulfat der Speicherkatalysator eine Temperatur von über 600°C aufweist und zudem ein Kraftstoff/Luftgemisch der Brennkraftmaschine zugeführt wird, das einer Luftzahl kleiner als 1 entspricht.

7. Verfahren nach einem der Ansprüche 1 bis 6, **dadurch gekennzeichnet, daß** der Zeitpunkt vom Schwefelgehalt des Kraftstoffes abhängt.

8. Verfahren nach Anspruch 1, **dadurch gekennzeichnet, daß** die relative Speicherbeladung (CB) des Speicherkatalysators (4) mit zunehmender thermischer Alterung zunimmt, und daß eine Regenerationsphase für den Abbau von Sulfat ausgelöst wird, wenn die relative Speicherbeladung (CB) über einem Maximalwert liegt.

## Claims

1. Method for regenerating a storage-type catalytic converter for an internal combustion engine, in which

   - a regeneration phase is carried out at a predefined time to reduce the sulphate stored in the storage-type catalytic converter, **characterised in that**

   - when calculating the time, the thermal ageing of the storage-type catalytic converter (4) is taken into account, with the thermal ageing of the storage-type catalytic converter (4) being defined on the basis of the load and speed of the internal combustion engine and/or on the basis of the temperature of the catalytic converter.

2. Method according to Claim 1, **characterised in that** the time is calculated on the basis of the quantity of sulphate stored in the storage-type catalytic converter.

3. Method according to Claim 2, **characterised in that** the quantity of sulphate stored in the storage-type catalytic converter is calculated on the basis of the quantity of fuel burned in the internal combustion engine.

4. Method according to Claim 3, **characterised in that** the quantity of fuel is weighted on the basis of the load and speed and/or on the basis of the fuel/air ratio and/or on the basis of the temperature of the catalytic converter, at which the fuel is burned.

5. Method according to Claim 1, **characterised in that** the time is determined on the basis of the number of regeneration phases carried out to reduce stored nitrogen oxide compounds (NOx).

6. Method according to one of Claims 1 to 5, **characterised in that** the storage-type catalytic converter reaches a temperature of over 600°C during the regeneration phase to reduce the sulphate and a fuel/air mixture with an air ratio of less than 1 is fed to the internal combustion engine.

7. Method according to one of Claims 1 to 6, **characterised in that** the time depends on the sulphur content of the fuel.

8. Method according to Claim 1, **characterised in that** the relative storage loading (CB) of the storage-type catalytic converter (4) increases as thermal ageing increases and that a regeneration phase to reduce sulphate is initiated when the relative storage loading (CB) is above a maximum value.

## Revendications

1. Procédé pour la régénération d'un catalyseur accumulateur pour un moteur à combustion interne, dans lequel

   - on effectue à un instant prédéterminé une phase de régénération pour la décomposition du sulfate accumulé dans le catalyseur accumulateur, **caractérisé en ce que**
   - pour la détermination de l'instant, on tient compte du vieillissement thermique du catalyseur accumulateur (4), le vieillissement thermique du catalyseur accumulateur (4) étant déterminé en fonction de la charge et de la vitesse de rotation du moteur à combustion interne et/ou en fonction de la température du catalyseur.

2. Procédé suivant la revendication 1, **caractérisé en ce que** l'instant est déterminé en fonction de la quantité de sulfate accumulée dans le catalyseur accumulateur.

3. Procédé suivant la revendication 2, **caractérisé en ce que** la quantité de sulfate accumulée dans le catalyseur accumulateur est calculée en fonction de la quantité de carburant consommée dans le moteur à combustion interne.

4. Procédé suivant la revendication 3, **caractérisé en ce que** la quantité de carburant est pondérée en fonction de la charge et de la vitesse de rotation et/ou en fonction du rapport carburant/air et/ou en fonction de la température du catalyseur, à laquelle le carburant a été consommé.

5. Procédé suivant la revendication 1, **caractérisé en ce que** l'instant est fixé en fonction du nombre des phases de régénération effectuées pour la décomposition de composés d'oxydes d'azote (NOx) accumulés.

6. Procédé suivant l'une quelconque des revendications 1 à 5, **caractérisé en ce que**, lors de la phase de régénération pour la décomposition du sulfate, le catalyseur accumulateur présente une température de plus de 600°C et en outre on envoie au moteur à combustion interne un mélange carburant/air qui correspond à un rapport d'air inférieur à 1.

7. Procédé suivant l'une quelconque des revendications 1 à 6, **caractérisé en ce que** l'instant dépend de la teneur en soufre du carburant.

8. Procédé suivant la revendication 1, **caractérisé en ce que** la charge d'accumulation relative (CB) du catalyseur accumulateur (4) augmente avec l'augmentation du vieillissement thermique, et **en ce que** l'on déclenche une phase de régénération pour la décomposition de sulfate lorsque la charge d'accumulation relative (CB) se situe au-dessus d'une valeur maximale.

# FIG 1

FIG 2

# FIG 3